# EUROPÄISCHE PATENTSCHRIFT

(11) **EP 0 470 528 B1**
(45) Veröffentlichungstag und Bekanntmachung des Hinweises auf die Patenterteilung: **25.10.1995**
(21) Anmeldenummer: 91113066.4
(22) Anmeldetag: 02.08.1991
(51) Int. Cl.: B60T 1/06, B60G 3/14

(54) **Schwinghebel-Radanordnung für Fahrzeugachsen**
Pivotal arm-type wheel arrangement for vehicle axles
Montage de roue à bras oscillant pour essieux de véhicule

(30) Priorität: 07.08.1990 DE 9011496 U
(43) Veröffentlichungstag der Anmeldung: 12.02.1992
(73) Patentinhaber: AL-KO KOBER AG, D-89359 Kötz (DE)
(72) Erfinder: Wöhrle, Rudolf, W-8873 Ichenhausen/Rieden (DE); Stachler, Siegfried, W-8877 Burtenbach (DE); Werdich, Anton, W-8878 Bibertal OT Anhofen (DE)
(74) Vertreter: Ernicke, Hans-Dieter, Dipl.-Ing.

(56) Entgegenhaltungen:
- CH-A- 181 680
- DE-A- 1 927 268
- GB-A- 2 192 959

## Beschreibung

Die Erfindung bezieht sich auf eine Schwinghebel-Radanordnung bei Fahrzeugachsen, insbesondere für Torsionsfederachsen von Fahrzeug-Anhängern, bei welcher der einzelne Radschwinghebel mit einem Lagerauge auf einem Achsstummel der Fahrzeugachse befestigt ist und mit einem anderen Lagerauge einen Radlagerbolzen trägt, an dem einerseits das Rad drehbar gelagert und andererseits ein Bremsträgerschild für die Anordnung von Bremsbetätigungsorganen befestigt ist.

Solche Einrichtungen werden in der Praxis bevorzugt für Wohnwagen und dgl. Anhänger eingesetzt. Die Problematik dieser vorbekannten Einrichtungen besteht in dem durch die Verschweißung der einzelnen Teile bedingten Schweißverzug. Einerseits ist der Radschwinghebel auf dem Achsstummel der Torsionsfederachse schweißtechnisch befestigt. Andererseits ist der Radlagerbolzen im anderen Lagerauge des Radschwinghebels ebenfalls durch Verschweißung befestigt. Der Bremsträgerschild ist bei der bekannten Anordnung auf dem Radlagerbolzen geführt und mit diesem ebenfalls verschweißt.

Mit dieser vorbekannten geschweißten Schwinghebel-Radanordnung ist die konstruktiv vorgegebene Vorspur sowie die Lage des Bremsträgerschildes gegenüber dem Radlagerbolzen nicht mehr veränderbar. Dies führt dazu, daß die vorbekannte Anordnung immer nur für eine konkrete Ausgestaltung eines Fahrzeuges einsetzbar ist und daß also eine komplizierte Lagerhaltung unterschiedlicher Schwinghebel-Radanordnungen erforderlich ist, um die voneinander stark abweichenden Fahrzeugkonstruktionen zu berücksichtigen.

Der Erfindung liegt daher das technische Problem zugrunde, eine Schwinghebel-Radanordnung der angegebenen Art so umzugestalten, daß Schweißarbeiten wesentlich reduziert werden können und eine Anpassung ein und derselben Konstruktion an unterschiedlich beschaffene Fahrzeuge ermöglicht wird.

Dieses Problem wird mit der Erfindung dadurch gelöst, daß der Bremsträgerschild auf dem Radlagerbolzen drehbar geführt und gemeinsam mit dem Radlagerbolzen bei dessen Festschrauben gegenüber dem Radschwinghebel gegen Drehung fixiert sowie zwischen einem Bund des Radlagerbolzens und dem Auge des Radschwinghebels festspannbar ist.

Im Gegensatz zum genannten Stand der Technik bleibt der erfindungsgemäße Bremsträgerschild auf dem Radlagerbolzen drehbar geführt; er ist also mit diesem nicht verschweißt. Dies führt dazu, daß der Bremsträgerschild in eine beliebig wählbare Drehstellung gegenüber dem Radlagerbolzen vor Beginn der Montage verstellt werden kann, wodurch eine Anpassung des Bremsträgerschildes an unterschiedlich beschaffene Fahrzeuge ermöglicht wird. Dies wird allein am Beispiel des Anschlusses der Bremsbetätigungsorgane, z. B. Bowdenzüge, erläutert. Zu diesem Zweck sind am Bremsträgerschild achsparallel zur Radachse sich erstreckende hülsenartige Widerlager vorgesehen, die zur Abstützung des Bowdenzuges oder eines anderen Bremsgestänges dienen. Der Ort der Zuführung solcher Bremsbetätigungsorgane weicht ganz erheblich unter den Fahrzeugen ab. Indem der erfindungsgemäße Bremsträgerschild auf dem Radlagerbolzen drehbar gelagert, aber in der richtigen Stellung dann drehfixiert befestigbar ist, bietet die Erfindung die Möglichkeit, einen einzigen, konstruktiv vorgegebenen Bremsträgerschild für zahlreiche, unterschiedlich beschaffene Fahrzeuge einsetzen zu können.

Ein anderer Vorteil der Erfindung ergibt sich dadurch, daß der Bremsträgerschild nicht mehr schweißtechnisch am Radlagerbolzen befestigt werden muß, wie dies beim Stand der Technik üblich war, und daß dadurch die Nachteile des Schweißverzuges völlig vermieden werden.

Im Rahmen einer Ausgestaltung der Erfindung ist vorgesehen, daß eine das Auge des Radschwinghebels durchsetzende und mit dem Auge verschweißte Nabe radseitig eine radiale Stirnverzahnung aufweist, in welche der passend verzahnte Lochrand des Bremsträgerschildes zum Zwecke seiner Fixierung gegen Drehung eingreift. Solange der Bremsträgerschild außer Eingriff mit dieser erwähnten Stirnverzahnung sich befindet, läßt er sich auf dem Radlagerbolzen beliebig verdrehen. Wenn aber der Radlagerbolzen am Auge des Radschwinghebels schraubtechnisch festgespannt wird, erfolgt sogleich eine drehfixierte Festspannung des Bremsträgerschildes zufolge des Eingriffes in die Stirnverzahnung der Nabe.

Hierzu ist es von Vorteil, daß die in axialer Richtung der Nabe sich erstreckende Tiefe der Verzahnung so groß bemessen ist, daß der Bremsträgerschild beim Lösen der Verschraubung zum Zwecke der Drehverstellung des Radlagerbolzens drehfixiert bleibt. Eine solche Lösung des Radlagerbolzens kann im Sinne des Anspruchs 4 der Erfindung deswegen von Vorteil sein, weil mit dieser Drehverstellung eine Änderung der Vorspur des Rades erreicht werden kann. Dies setzt allerdings voraus, daß der Radlagerbolzen zueinander geknickte Lagerschäfte für die Lagerung des Rades und für die Befestigung im Radschwinghebel aufweist. Eine solche Drehverstellung des Radlagerbolzens zum Zwecke der Verstellung der Vorspur soll erfindungsgemäß nicht zur Lösung der Drehfixierung des Bremsträgerschildes gegenüber dem Radschwinghebel führen.

Einzelheiten der Erfindung sind in den Zeichnungen schematisch und beispielsweise dargestellt. Es zeigen:
- Fig. 1:: einen Vertikalschnitt durch eine Radlagerung an einem Radschwinghebel,
- Fig. 2:: einen Vertikalschnitt durch eine Radialverzahnung zwischen dem Bremsträgerschild und einer Lageraugen-Nabe in einer auseinandergezogenen Stellung und
- Fig. 3:: einen Querschnitt durch die Anordnung gemäß Fig. 2 nach der Linie III - III.

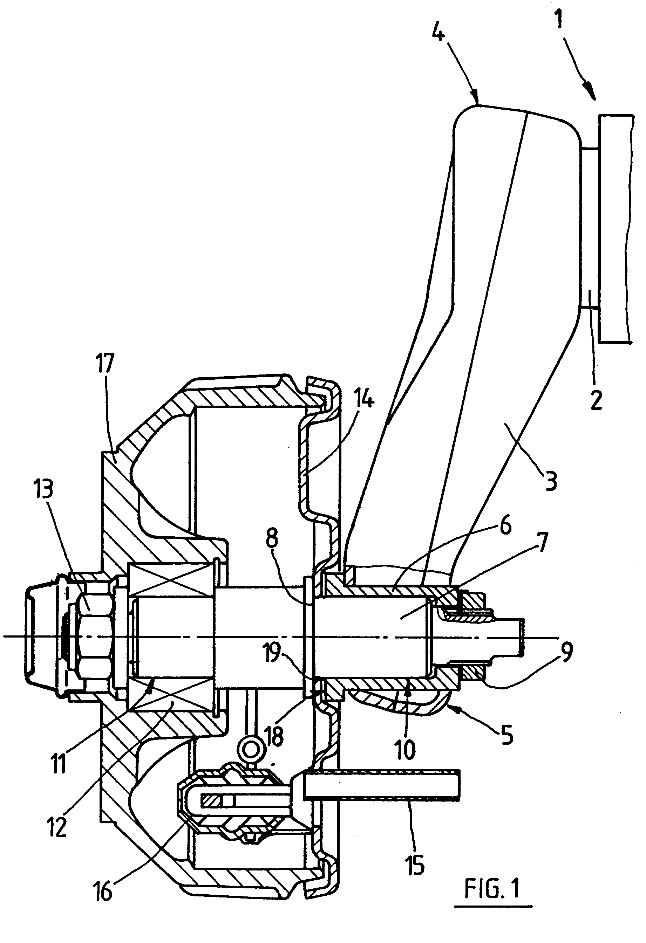

Im Ausführungsbeispiel der Fig. 1 ist eine Torsionsfederachse (1) eines Fahrzeuges, insbesondere eines Fahrzeuganhängers (z.B. Wohnwagen), ganz schematisch dargestellt. Diese Torsionsfederachse (1) weist je Rad einen Achsstummel (2) auf, auf dem das Lagerauge (4) eines Radschwinghebels (3) befestigt ist. Dieser Radschwinghebel (3) besitzt ein weiteres Lagerauge (5), in dem ein Radlagerbolzen (7) geführt und durch eine Verschraubung (9) festspannbar ist. Zu diesem Zweck ist im Lagerauge (5) eine Nabe (6) vorgesehen und am Radschwinghebel (3) außenseitig verschweißt, welche den Lagerschaft (10) des Radlagerbolzens (7) führt. Mit einem Bund (8) wird der Radlagerbolzen (7) über die Verschraubung (9) gegenüber dem Radschwinghebel (3) bzw. dessen Auge (5) fixiert.

Ein anderer Lagerschaft (11) des Radlagerbolzen (7) dient zur Aufnahme des Radlagers (12) zur drehbaren Führung der Radtrommel (17) des Rades. Diese Radtrommel (17) wird in üblicher Weise über die Verschraubung (13) gegenüber dem Radlagerbolzen (7) verspannt.

Der Bremsträgerschild (14) soll nun im Sinne der Erfindung in der festgespannten Stellung gegenüber dem Radschwinghebel (3) drehfixiert sein, so daß sich zwischen dem Bremsträgerschild (14) und der Radtrommel (17) eine Relativ-Drehbewegung ergeben kann. Andererseits soll der Bremsträgerschild (14) an verschiedene Ausbildungen von Fahrzeugen anpaßbar sein, weshalb der Bremsträgerschild (14) auf dem Radlagerbolzen (7) drehbar gelagert und in der Spannstellung gegenüber dem Radschwinghebel (3) drehfixiert ist. Diese Problematik ergibt sich beispielsweise aus der Anordnung des Widerlagers (15) für einen Bowdenzug. Bei Fahrzeugen unterschiedlicher Konstruktion ist die Lage des Bowdenzuges unterschiedlich. Folglich muß die Lage des Bremsträgerschildes (14) daran angepaßt sein. Wenn nun erfindungsgemäß der Bremsträgerschild (14) drehverstellbar auf dem Radlagerbolzen (7) angeordnet ist, läßt dieser sich an die Lage der Bremsbetätigungsorgane des einzelnen Fahrzeuges anpassen. Ist aber diese Anpassung erfolgt, darf der Bremsträgerschild (14) in der festgespannten Stellung nicht mehr drehbar sein.

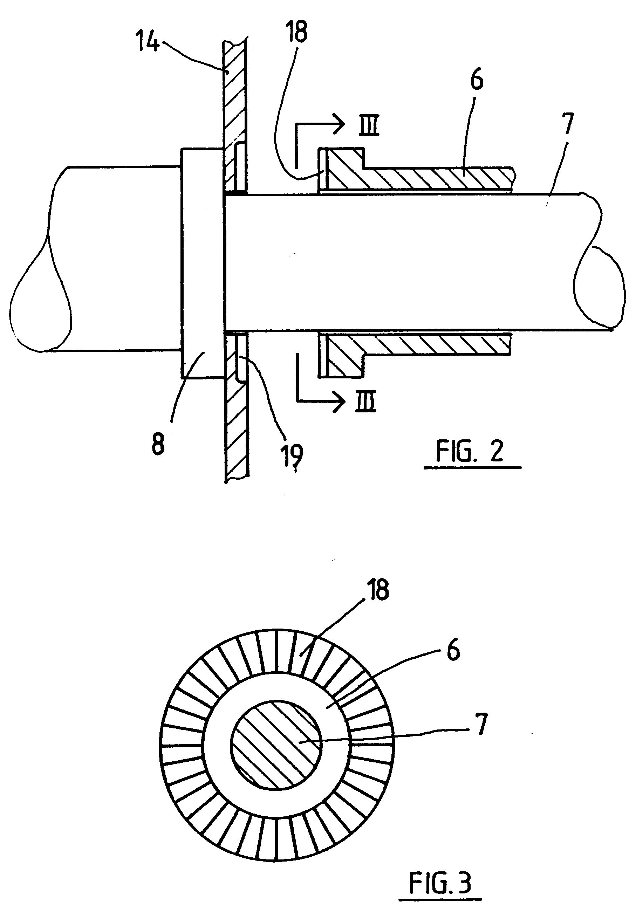

Zu diesem Zweck ist beim Ausführungsbeispiel eine Drehsperre vorgesehen, die aus einer Radial-Stirnverzahnung (18) der Nabe (6) und einem entsprechend ausgebildeten Lochrand (19) des Bremsträgerschildes (14) besteht. Im festgespannten Zustand greifen die einzelnen Teile der Stirnradverzahnung (18) und des Lochrandes (19) ineinander ein, wie dies in den Figuren 2 und 3 detailliert erkennbar ist.

Hierbei ist darauf zu achten, daß die Drehsperre zwischen dem Bremsträgerschild (14) und der Nabe (6) bzw. dem Randschwinghebel (3) erhalten bleibt, wenn es nur darum geht, den Radlagerbolzen (7) um einen gewissen Winkelbereich zu verstellen. Diese Möglichkeit ist dann gegeben, wenn der Lagerschaft (11) für die Lagerung des Rades (17) und der Lagerschaft (10) für die Zentrierung des Radlagerbolzens (7) im Radschwinghebel (3) zueinander geknickt sind. Diese Knickung hat den Vorteil, ein und dieselbe Schwinghebel-Radanordnung für beide Räder einer Achse sowie für die Räder unterschiedlich beschaffener Fahrzeuge einzusetzen, wobei die Vorspur im Rahmen gewisser Grenzen beliebig einstellbar ist. Einer solchen Verstellung darf die voreingestellte Lage des Bremsträgerschildes (14) nicht folgen.

### STÜCKLISTE

- 1: Torsionsfederachse
- 2: Achsstummel
- 3: Radschwinghebel
- 4: Lagerauge
- 5: Lagerauge
- 6: Nabe
- 7: Radlagerbolzen
- 8: Bund
- 9: Verschraubung
- 10: Lagerschaft
- 11: Lagerschaft
- 12: Radlager
- 13: Verschraubung
- 14: Bremsträgerschild
- 15: Widerlager für Bowdenzug
- 16: Bremsbetätigungsorgan
- 17: Radtrommel
- 18: Radial-Stirnverzahnung
- 19: Lochrand

## Patentansprüche

1. Schwinghebel-Radanordnung bei Fahrzeugachsen, insbesondere für Torsionsfederachsen (1) von Fahrzeug-Anhängern, bei welcher der einzelne Radschwinghebel (3) mit einem ersten Lagerauge (4) auf einem Achsstummel (2) der Fahrzeugachse (1) befestigt ist und mit einem zweiten Lagerauge (5) einen Radlagerbolzen (7) trägt, an dem einerseits das Rad (17) drehbar gelagert und andererseits ein Bremsträgerschild (14) für die Anordnung von Bremsbetätigungsorganen (15,16) befestigt ist, dadurch **gekennzeichnet**, daß der Bremsträgerschild (14) auf dem Radlagerbolzen (7) zunächst drehbar geführt ist und gemeinsam mit dem Radlagerbolzen (7) bei dessen Festschrauben gegenüber dem Radschwinghebel (3) gegen Drehung fixiert sowie zwischen einem Bund (8) des Radlagerbolzens (7) und dem zweiten Lagerauge (5) des Radschwinghebels (3) festgespannt wird.

2. Radanordnung nach Anspruch 1, dadurch **gekennzeichnet**, daß eine das zweite Lagerauge (5) des Radschwinghebels (3) durchsetzende und mit dem zweiten Lagerauge (5) verschweißte Nabe (6) radseitig eine radiale Stirnverzahnung (18) aufweist, in welche ein passend verzahnter Lochrand (19) des Bremsträgerschildes (14) zum Zweck seiner Fixierung gegen Drehung eingreift.

3. Radanordnung nach Anspruch 2, dadurch **gekennzeichnet**, daß die in axialer Richtung der Nabe (6) sich erstreckende Tiefe der Verzahnung (18) so groß bemessen ist, daß der Bremsträgerschild (14) beim Lösen der Verschraubung (9) zum Zweck der Drehverstellung des Radlagerbolzens (7) drehfixiert bleibt.

4. Radanordnung nach Anspruch 1 oder einem der folgenden, dadurch **gekennzeichnet**, daß der mit einer Knickung seines Radlagerschaftes (11) gegenüber dem zum Festspannen bestimmten Lagerschaft (10) versehene Radlagerbolzen (7) zum Zweck der Vorspur-Einstellung verdrehbar geführt ist und der Bremsträgerschild (14) bei dieser Verdrehung drehfixiert bleibt.

## Claims

1. A pivotal arm-type wheel arrangement in vehicle axles, in particular for torsion bar axles (1) of vehicle trailers, in which the individual wheel pivotal arm (3) is secured by means of a first bearing boss (4) to an axle journal (2) of the vehicle axle (1) and carries by means of a second bearing boss (5) a wheel bearing pin (7), on which on the one hand the wheel (17) is rotatably mounted and to which on the other hand a brake anchor plate (14) for the arrangement of brake-actuating elements (15, 16) is secured, characterized in that the brake anchor plate (14) is first guided rotatably on the wheel bearing pin (7) and is fixed to prevent rotation with respect to the wheel pivotal arm (3), together with the wheel bearing pin (7), when the latter is screwed tight, and is clamped firmly between a collar (8) of the wheel bearing pin (7) and the second bearing boss (5) of the wheel pivotal arm (3).

2. A wheel arrangement according to Claim 1, characterized in that a hub (6) passing through the second bearing boss (5) of the wheel pivotal arm (3) and welded to the second bearing boss (5) has, on the wheel side, a radial end toothing (18) in which a matchingly toothed aperture rim (19) of the brake anchor plate (14) engages for the purpose of fixing it to prevent rotation.

3. A wheel arrangement according to Claim 2, characterized in that the depth of the toothing (18) extending in the axial direction of the hub (6) is of a size such that the brake anchor plate (14) remains fixed to prevent rotation when the screw connection (9) is loosened for the purpose of rotational adjustment of the wheel bearing pin (7).

4. A wheel arrangement according to Claim 1 or one of the subsequent claims, characterized in that the wheel bearing pin (7), which is provided with a bend in its wheel bearing shaft (11) with respect to the bearing shaft (10) intended for firmly clamping, is guided rotatably for the purpose of adjusting the toe-in, and the brake anchor plate (14) remains fixed to prevent rotation during that rotation.

## Revendications

1. Dispositif de roue à bras oscillant pour des essieux de véhicule, notamment pour des essieux à barre de torsion (1) de remorques de véhicules, dans lequel le bras oscillant de roue (3) est fixé au moyen d'un premier oeillet de palier (4) sur une fusée (2) de l'essieu (1) du véhicule et porte, au moyen d'un second oeillet de palier (5), un axe de roulement de roue (7), sur lequel d'une part la roue (17) est montée de manière à pouvoir tourner et sur lequel d'autre part un étrier de support de frein (14) est fixé pour le montage d'organes (15,16) d'actionnement du frein, caractérisé par le fait que le flasque de support de frein (14) est guidé sur l'axe de roulement de roue (7) tout d'abord de manière à pouvoir tourner et, conjointement avec l'axe de roulement de roue, est solidaire en rotation du bras oscillant de roue (3), lors de sa fixation par vissage, et est bloqué solidement entre un collet (8) de l'axe de roulement de roue (7) et le second oeillet de palier (5) du bras oscillant de roue (3).

2. Dispositif de roue suivant la revendication 1, caractérisé par le fait qu'un moyeu (6), qui passe dans le second oeillet de palier (5) du bras oscillant de roue (3) et est soudé au second oeillet de palier (5), comporte, du côté de la roue, une denture frontale radiale (18), dans laquelle un bord de trou (19), possédant une denture adaptée, du flasque de support de frein (14), engrène pour son blocage contre toute rotation.

3. Dispositif de roue suivant la revendication 2, caractérisé par le fait que la profondeur de la denture (18), qui s'étend dans la direction axiale du moyeu (6), est telle que lors du desserrage du système de vissage (9), le flasque de support de frein (14) reste bloqué en rotation de manière à permettre l'entraînement en rotation de l'axe de roulement de roue (7).

4. Dispositif de roue suivant la revendication 1 ou l'une des suivantes, caractérisé par le fait que l'axe de roulement de roue, dont l'arbre (11) présente un coude par rapport à l'arbre de support (10) prévu pour le blocage est guidé de manière à pouvoir tourner pour le réglage du pincement de roue et que le flasque de support de frein (14) reste bloqué en rotation lors de cette rotation.
